Europäisches Patentamt

European Patent Office

Office européen des brevets

(11) Veröffentlichungsnummer: **0 317 502 B1**

(12) # EUROPÄISCHE PATENTSCHRIFT

(45) Veröffentlichungstag der Patentschrift:
18.09.91 Patentblatt 91/38

(51) Int. Cl.$^5$: **G01B 7/28**, G01B 5/20

(21) Anmeldenummer: **88810746.3**

(22) Anmeldetag: **03.11.88**

(54) **Vorrichtung zum Bestimmen der Planheit eines plattenförmigen Körpers.**

(30) Priorität: 06.11.87 CH 4350/87

(43) Veröffentlichungstag der Anmeldung:
**24.05.89 Patentblatt 89/21**

(45) Bekanntmachung des Hinweises auf die
Patenterteilung:
**18.09.91 Patentblatt 91/38**

(84) Benannte Vertragsstaaten:
**AT BE CH DE ES FR GB GR IT LI LU NL SE**

(56) Entgegenhaltungen:
**EP-A- 0 125 330**
**DE-A- 2 434 603**
**DE-A- 3 121 579**
**GB-A- 2 038 484**
**US-A- 3 733 704**

(73) Patentinhaber: **ALUSUISSE-LONZA**
**SERVICES AG**
**Feldeggstrasse 4**
**CH-8034 Zürich (CH)**

(72) Erfinder: **Kübler, Paul**
**Nelkenstrasse 13**
**CH-8212 Neuhausen am Rheinfall (CH)**

## Beschreibung

Die Erfindung betrifft eine Vorrichtung zum Bestimmen der Planheit eines plattenförmigen Körpers durch Messen der relativen räumlichen Lage von Punkten auf seiner Oberfläche, mit einer Unterlage, auf welcher der plattenförmige Körper während des Messvorganges frei aufliegt.

Dünne Platten und Bleche aus Metall, Kunststoff oder Metall-Kunststoff-Verbundwerkstoffen, welche durch Walzen, Plattieren, Extrudieren und andere Verfahren kontinuierlich hergestellt werden, weisen oftmals nach dem Zuschneiden verbleibende, herstellungsbedingte Eigenspannungen auf, die ein Verziehen der Platten zur Folge haben. Zur Verminderung der Eigenspannungen sind entsprechende Aenderungen der Verfahrensparameter bei der kontinuierlichen Herstellung erforderlich, welche auf Grund der an der zugeschnittenen Platte festgestellten Abweichungen von der geforderten Verzugsfreiheit vorgenommen werden müssen.

Die Planheit einer Platte wird üblicherweise bestimmt durch Messen der Lage ausgewählter Punkte auf der Plattenoberfläche gegenüber einer festen Unterlage, auf welcher die Platte während des Messvorgangs liegt. Insbesondere bei grossflächigen dünnen Platten kann jedoch das Messergebnis durch das Eigengewicht der Platte erheblich verfälscht sein.

Angesichts dieser Gegebenheiten hat sich der Erfinder das Ziel gesetzt, eine Vorrichtung der eingangs erwähnten Art bereitzustellen, mit welcher die Planheit einer dünnen Platte unter Ausschaltung des Einflusses ihres Eigengewichts auf einfache Weise bestimmt werden kann.

Zur Lösung dieser Aufgabe führt, dass die Unterlage aus einer Vielzahl von regelmässig angeordneten und dem plattenförmigen Körper über jeweils eine im wesentlichen punktförmige Auflagefläche anliegenden, vertikal bewegbaren Stützträgern besteht, wobei die Stützträger mechanisch, hydraulisch oder pneumatisch untereinander derart verbunden sind, dass von jedem Stützträger im wesentlichen dieselbe Kraft auf den plattenförmigen Körper übertragen wird.

Mit der erfindungsgemässen Vorrichtung wird erreicht, dass sich das Gewicht des plattenförmigen Körpers gleichmässig auf die einzelnen Stützträger verteilt. Dadurch wird einem zusätzlichen Verziehen der Platte unter dem Einfluss ihres Eigengewichts entgegengewirkt, sodass an einer aufliegenden Platte ihre effektive Planheit gemessen werden kann.

Für eine optimale Lagerung der zu vermessenden Platte wird diese gedanklich in eine der Anzahl Stützträger entsprechend gleiche Anzahl gleichförmiger Teilflächen aufgeteilt und die Auflagepunkte der Stützträger an der Platte so gewählt, dass diese jeweils im Schwerpunkt einer Plattenteilfläche liegen. Damit wird das Eigengewicht jeder Teilfläche am Auflagepunkt ausbalanciert und die verbleibende Gesamtplattendeformation ist nur durch die inneren Plattenspannungen bestimmt.

Bei einer mechanischen Kopplung der Stützträger umfasst die Vorrichtung ein System von in der Art von Balkenwaagen im Gleichgewicht aufgehängter und rechtwinklig zueinander angeordneter Balken, wobei jedes Balkenende gleichzeitig Drehpunkt für den folgenden rechtwinklig anstossenden Balken bildet, und wobei die senkrecht nach oben gerichteten Stützträger an den freien Balkenenden festgelegt sind. Bevorzugt sind die Balkenlängen derart aufeinander abgestimmt, dass die Abstände benachbarter Stützträger innerhalb der beiden Balkenrichtungen gleich gross sind. Diese regelmässige Anordnung der Auflagepunkte führt zu einer optimalen Lagerung der zu vermessenden Platte.

Bei einer hydraulischen oder pneumatischen Kopplung der Stützträger sind diese je einem Kolben eines Zylinder/Kolben-Elementes aufgesetzt und die Zylinder über festwandige Schläuche in der Art kommunizierender Gefässe untereinander verbunden. Hierbei bilden die mit einer Hydraulikflüssigkeit oder mit einem Gas - - beispielsweise Luft, gegebenenfalls unter einem gegenüber der Atmosphäre erhöhten Druck - - gefüllten Zylinder und Schläuche ein geschlossenes System. Eine regelmässige Anordnung der Zylinder/Kolben-Elemente führt auch hier zu einer optimalen Lagerung der zu vermessenden Platte. Die hydraulische bzw. pneumatische Ausführung hat den zusätzlichen Vorteil, dass sie auf einfache Weise durch hinzufügen oder weglassen von Zylinder/Kolben-Elementen jeder beliebigen Plattengrösse angepasst werden kann. Eine weitere Möglichkeit besteht darin, die Zylinder/Kolben-Elemente zur Anpassung an die jeweilige Grösse des plattenförmigen Körpers in horizontaler Richtung verschiebbar anzuordnen.

Die Planheit des plattenförmigen Körpers wird durch die Position der Auflagepunkte der Stützträger an der Plattenoberfläche wiedergegeben und kann demzufolge auf einfache Weise beispielsweise durch Messen der Balkenneigungen bzw. der Kolbenstellungen in den Zylindern erfolgen, wobei bevorzugt die mechanischen Verschiebungen in elektrische Messignale umgewandelt werden. Hierzu können Einrichtungen zur Bestimmung der vertikalen Position der Stützträger vorgesehen sein. Selbstverständlich kann die eigentliche Planheitsmessung auch unabhängig von der Auflagevorrichtung - - z.B. mit einem LASER-Scanner - - durchgeführt werden. Die erfindungsgemässe Vorrichtung bietet sich insbesondere auch für die in-line-Planheitsmessung in einer kontinuierlich arbeitenden Produktionslinie an.

Weitere Vorteile, Merkmale und Einzelheiten der Erfindung ergeben sich aus der nachfolgenden Beschreibung bevorzugter Ausführungsbeispiele sowie anhand der Zeichnung ; diese zeigt in

Fig. 1 : eine Schrägsicht auf eine mechanische Ausführung ;

Fig. 2 : eine Schrägsicht auf eine hydraulische Ausführung ;

Fig. 3 : einen Querschnitt durch ein Zylinder/Kolben-Element.

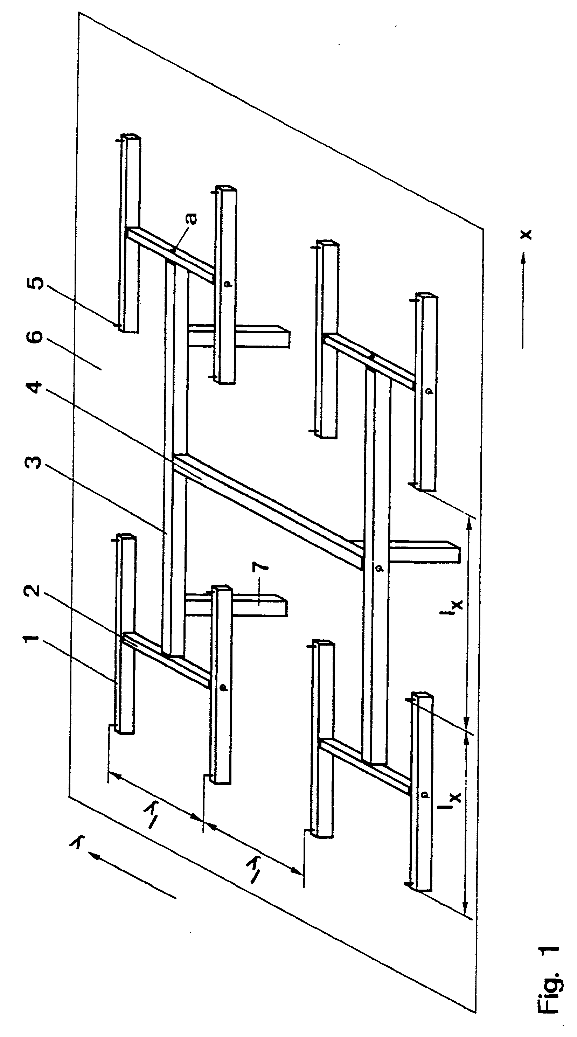

Eine mechanische Ausführung der erfindungsgemässen Vorrichtung besteht gemäss Fig. 1 aus einem System von Auflagebalken 1, Querbalken 2, Grundbalken 3 und einem Verbindungsbalken 4. Sämtliche Auflagebalken 1 sind parallel zueinander sowie parallel zu den Grundbalken 3 angeordnet. Die Auflagebalken 1 sind paarweise über je einen Querbalken 2 und diese wiederum paarweise über je einen Grundbalken 3 verbunden. Der Verbindungsbalken 4 liegt zwischen den beiden Grundbalken 3. Die Querbalken 2 und der Verbindungsbalken 4 stehen hierbei rechtwinklig zu den Auflagebalken 1 und den Grundbalken 3. Die Stosstellen zwischen den rechtwinklig aufeinandertreffenden Balken liegen jeweils in der Balkenmitte und jeder Balken ist um die Längsachse a des anstossenden Balkens frei drehbar. An beiden Enden der Auflagebalken 1 sind vertikal nach oben gerichtete Stützträger 5 festgelegt, deren freie Enden Auflagepunkte für einen plattenförmigen Körper 6 bilden. Die Balkenlängen sind derart aufeinander abgestimmt, dass die Abstände $l_x$ und $l_y$ benachbarter Stützträger 5 in den beiden Balkenrichtungen x und y jeweils gleich sind.

Damit das System bei aufgelegtem plattenförmigen Körper 6 eine stabile und im wesentlichen horizontale Lage einnimmt, ist gemäss Fig. 1 einer der Grundbalken 3 sowie der Verbindungsbalken 4 durch Träger 7 gegenüber einer feststehenden Unterlage horizontal abgestützt und demzufolge die freie Drehbarkeit des einen Grundbalkens 3 am Verbindungsbalken 4 aufgehoben. Weiterhin ist zur horizontalen Stabilisierung des Balkensystems vorgesehen, dass - - in der Zeichnung nicht dargestellt - - die Aufhängung der Balken, insbesondere der Auflagebalken 1 und der Querbalken 2, leicht über deren Schwerpunkt liegt. Damit ist sichergestellt, dass die Stützträger 5 vor dem Auflegen des plattenförmigen Körpers 6 bereits die richtige Lage einnehmen, d.h. nach oben gerichtet sind.

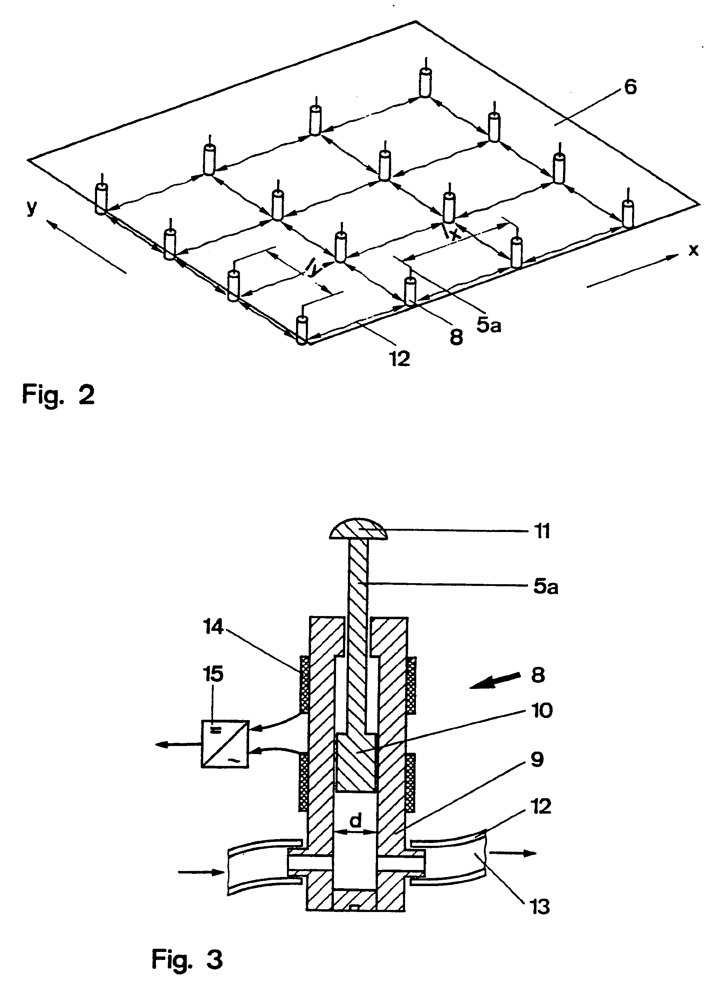

Eine hydraulische Ausführung der erfindungsgemässen Vorrichtung besteht gemäss Fig. 2 aus einer regelmässigen Anordnung von gegenüber einer horizontalen Unterlage senkrecht stehenden Zylinder/Kolben-Elementen 8. Wie insbesondere auch aus Fig. 3 hervorgeht, besteht jedes Zylinder/Kolben-Element 8 aus einem Zylinder 9 - - beispielsweise aus Kunststoff - - und einem z.B. aus Stahl gefertigten Kolben 10 mit aufgesetztem Stützträger 5a. Am freien Ende des Stützträgers 5a sitzt ein gerundeter Auflagekopf 11 aus einem gleitfähigen Kunststoff, beispielsweise Teflon. Die als Auflagepunkte für den plattenförmigen Körper 6 dienenden Auflageköpfe 11 bilden insgesamt ein Rechteckmuster mit in den Hauptachsenrichtungen x und y gleichen Abständen $l_x$ und $l_y$. Die Zylinder 9, die im übrigen alle denselben Innendurchmesser d aufweisen, sind über festwandige Schläuche 12 untereinander verbunden und bilden ein mit Hydraulikflüssigkeit 13 gefülltes, geschlossenes System. In Fig. 3 ist im weiteren eine Einrichtung 14, 15 angedeutet, welche die Vertikalverschiebung des Kolbens 10 zur Messung der Position des Auflagekopfes 11 in ein elektrisches Signal umwandelt. Zur horizontalen Stabilisierung des Systems bei aufgelegtem plattenförmigen Körper 6 sind - - in der Zeichnung nicht dargestellt - - jeweils zwei Kolben 10 arretierbar ausgebildet.

**Patentansprüche**

1. Vorrichtung zum Bestimmen der Planheit eines plattenförmigen Körpers durch Messen der relativen räumlichen Lage von Punkten auf seiner Oberfläche, mit einer Unterlage, auf welcher der plattenförmige Körper während des Messvorganges frei aufliegt, dadurch gekennzeichnet, dass die Unterlage aus einer Vielzahl von regelmässig angeordneten und dem plattenförmigen Körper (6) über jeweils eine im wesentlichen punktförmige Auflagefläche anliegenden, vertikal bewegbaren Stützträgern (5, 5a) besteht, wobei die Stützträger (5, 5a) mechanisch, hydraulisch oder pneumatisch untereinander derart verbunden sind, dass von jedem Stützträger (5, 5a) im wesentlichen dieselbe Kraft auf den plattenförmigen Körper (6) übertragen wird.

2. Vorrichtung nach Anspruch 1, gekennzeichnet durch ein System von in der Art von Balkenwaagen im Gleichgewicht aufgehängter und rechtwinklig zueinander angeordneter Balken (1, 2, 3, 4), wobei jedes Balkenende gleichzeitig Drehpunkt für den folgenden rechtwinklig anstossenden Balken bildet, und wobei die senkrecht nach oben gerichteten Stützträger (5) an den freien Balkenenden festgelegt sind.

3. Vorrichtung nach Anspruch 2, dadurch gekennzeichnet, dass die Abstände ($l_x$, $l_y$) benachbarter Stützträger (5) in den beiden Balkenrichtungen (x, y) gleich gross sind.

4. Vorrichtung nach Anspruch 1, dadurch gekennzeichnet, dass die Stützträger (5a) je einem Kolben (10) eines Zylinder/Kolben-Elementes (8) aufgesetzt, die Zylinder (9) über festwandige Schläuche (12) in der Art kommunizierender Gefässe untereinander verbunden und mit einer Hydraulikflüssigkeit (13) oder mit einem Gas gefüllt sind, wobei Zylinder (9) und Schläuche (12) ein geschlossenes System bilden.

5. Vorrichtung nach Anspruch (4), dadurch gekennzeichnet, dass die Zylinder/Kolben-Elemente (8) zur Anpassung an die jeweilige Grösse des plattenförmigen Körpers (6) in horizontaler Richtung (x, y) verschiebbar angeordnet sind.

6 Vorrichtung nach einem der Ansprüche 1 bis 5, gekennzeichnet durch Einrichtungen (14, 15) zur Bestimmung der vertikalen Position der Stützträger (5, 5a).

## Claims

1. Device for determining the surface evenness of a plate-like body by measuring the relative spatial position of points on its surface, with a substrate on which the plate-like body rests freely during the measuring process, characterised in that the substrate consists of a plurality of regularly arranged, vertically movable king posts (5, 5a) abutting against the plate-like body (6) in each case by means of an essentially punctiform bearing surface, wherein the king posts (5, 5a) are connected to each other mechanically, hydraulically or pneumatically in such a way that essentially the same force is transmitted to the plate-like body (6) from each king post (5, 5a).

2. Device according to claim 1, characterised by a system of beams (1, 2, 3, 4) suspended in equilibrium in the manner of beam balances and arranged at right angles to each other, wherein each beam end simultaneously forms a pivot point for the next perpendicularly abutting beam, and wherein the vertically upwardly extending king posts (5) are fixed to the free beam ends.

3. Device according to claim 2, characterised in that the distances ($l_x$, $l_Y$) between adjacent king posts (5) are equal in both beam directions (x, y).

4. Device according to claim 1, characterised in that the king posts (5a) are each mounted on top of a piston (10) of a piston and cylinder unit (8), and the cylinders (9) are connected to each other by hoses (12) with rigid walls in the manner of communicating vessels and filled with a hydraulic fluid (13) or with a gas, wherein cylinders (9) and hoses (12) form a closed system.

5. Device according to claim 4, characterised in that the piston and cylinder units (8) are arranged slidably in a horizontal direction (x, y) for adaptation to the respective size of the plate-like body (6).

6. Device according to any of claims 1 to 5, characterised by means (14, 15) for determining the vertical position of the king posts (5, 5a).

## Revendications

1. Appareil pour le contrôle de la planéité d'un corps en forme de plaque, qui opère par mesure de la position relative dans l'espace de certains points de la surface de ce corps, comprenant une portée sur laquelle le corps en forme de plaque repose librement pendant l'opération de mesure, caractérisé en ce que la portée est composé d'une multiplicité de supports d'appui (5, 5a) répartis uniformément, mobiles dans la direction verticale, et qui sont en contact avec le corps (6) en forme de plaque, chacun par l'intermédiaire d'une surface de portée sensiblement ponctuelle, les supports d'appui (5, 5a) étant reliés les uns aux autres, par une liaison mécanique, hydraulique ou pneumatique, de telle manière que chaque support d'appui (5, 5a) transmette sensiblement la même force au corps (6) en forme de plaque.

2. Appareil selon la revendication 1, caractérisé par un système de poutres (1, 2, 3, 4) suspendues en équilibre à la façon de fléaux de balances, et disposées perpendiculairement entre elles, chaque extrémité d'une poutre formant en même temps l'axe d'articulation pour la poutre suivante, qui s'y raccorde à angle droit, et les supports d'appui (5) dirigés verticalement vers le haut étant fixés aux extrémités libres des poutres.

3. Appareil selon la revendication 2, caractérisé en ce que les distances ($l_x$, $l_y$) entre supports d'appui (5) adjacents sont identiques entre elles dans les deux directions (x, y) des poutres.

4. Appareil selon la revendication 1, caractérisé en ce que les supports d'appui (5a) sont posés chacun sur un piston (10) d'un élément à cylindre et piston (8), les cylindres (9) sont reliés entre eux par des tuyaux (12) à paroi rigide, à la façon de vases communicants, et sont remplis d'un liquide hydraulique (13) ou d'un gaz, les cylindres (9) et les tuyaux (12) formant un système fermé.

5. Appareil selon la revendication 4, caractérisé en ce que les éléments à cylindre et piston (8) sont agencés mobiles en translation dans la direction horizontale (x, y) pour adapter l'appareil à la dimension du corps (6) en forme de plaque.

6. Appareil selon une des revendications 1 à 5, caractérisé par des dispositifs (14, 15) servant à mesurer la position verticale des supports d'appui (5, 5a).

Fig. 1

EP 0 317 502 B1

Fig. 2

Fig. 3